# FASCICULE DE BREVET EUROPEEN

(11) **EP 4 153 462 B1**
(45) Date de publication et mention de la délivrance du brevet: **23.07.2025**
(21) Numéro de dépôt: 21727449.7
(22) Date de dépôt: 19.05.2021
(51) Int. Cl.: B60W 60/00, B60W 50/14, B60W 50/16

(54) **VEHICULE ROUTIER ET PROCEDE DE CONDUITE AUTONOME AVEC SURVEILLANCE DE LA PERSONNE TRANSPORTEE POUR AMELIORER L'ACCEPTATION DE MANOEUVRES AUTONOMES**
STRASSENFAHRZEUG UND AUTONOMES FAHRVERFAHREN MIT ÜBERWACHUNG DER PERSON BEIM TRANSPORT ZUR VERBESSERUNG DER ANNAHME VON AUTONOMEN MANÖVERN
ROAD VEHICLE AND AUTONOMOUS DRIVING METHOD WITH MONITORING OF THE PERSON BEING TRANSPORTED TO IMPROVE ACCEPTANCE OF AUTONOMOUS MANOEUVRES

(30) Priorité: 20.05.2020 FR 2005285
(43) Date de publication de la demande: 29.03.2023
(73) Titulaire: Université Gustave Eiffel, 77420 Champs-Sur-Marne (FR)
(72) Inventeur: BELLET, Thierry, 69001 LYON (FR)
(74) Mandataire: Lavoix
(86) Numéro de dépôt international: PCT/EP2021/063274
(87) Numéro de publication internationale: WO 2021/233990

(56) Documents cités:
- US-A1- 2018 072 323
- US-A1- 2019 389 454
- US-B1- 10 372 130

## Description

La présente invention concerne un véhicule routier et un procédé de conduite autonome d'un tel véhicule routier.

L'invention se rapporte au domaine technique des véhicules routiers autonomes pour le transport de personnes.

US 2019/389454A1 décrit une unité de contrôle de conduite autonome pour contrôler la conduite autonome d'un véhicule hôte et pour prédire des anomalies physiques survenant chez un passager en raison de la conduite autonome. Une unité de contrôle d'interface génère des contenus de fonctionnement du véhicule hôte afin d'atténuer les anomalies physiques prédites et fournit ces contenus au passager.

US 2018/0072323A1 décrit un véhicule à conduite autonome qui avertit les passagers d'une manœuvre à venir et expliquer pourquoi le véhicule autonome va effectuer cette manœuvre.

US 10 372 130 B1 décrit des techniques permettant de communiquer aux passagers de véhicules autonomes des informations sur les raisons des actions entreprises par les véhicules autonomes afin d'instaurer un climat de confiance avec les passagers.

On connait des véhicules routiers pour transporter des personnes, tels qu'une voiture autonome ou un autobus autonome, qui sont aptes à mettre en œuvre des manœuvres autonomes à l'aide d'un automate de conduite. Ces manœuvres autonomes peuvent être souples et progressives, telles qu'un maintien dans la voie du véhicule, de sorte qu'elles n'ont pas d'impact sur les personnes transportées, qu'elles soient conductrices du véhicule ou non. Au contraire, les personnes transportées peuvent être surprises ou décontenancées par la mise en œuvre de certaines manœuvres autonomes brusques ou inconfortables, par exemple un freinage d'urgence ou un changement de direction soudain pour éviter un obstacle. Par inconfort lors de la manœuvre autonome, par surprise ou par incompréhension des motifs ayant conduit le véhicule à mettre en œuvre la manœuvre autonome, les personnes transportées peuvent être amenées à ne pas accepter la manœuvre autonome qui vient d'être effectuée, alors même que l'automate de conduite a effectué cette manœuvre dans l'intérêt des personnes transportées, pour leur sécurité, ou pour la sécurité d'un environnement de conduite 8 du véhicule. L'acceptation de la manœuvre autonome est la plus réduite lorsque les personnes étaient inattentives à la conduite du véhicule au moment où la manœuvre autonome est mise en œuvre, car la manœuvre génère alors surprise et incompréhension auprès de ces personnes. En cas de manœuvre autonome brusque, une personne transportée inattentive peut même être physiquement malmenée si elle ne s'est pas suffisamment cramponnée. A terme, ces difficultés peuvent affecter le niveau de confiance que les personnes transportées vouent à l'automate de conduite. Or, il est primordial que les personnes transportées par le véhicule routier autonome aient un niveau de confiance élevé pour accepter l'automate de conduite.

L'invention vise à remédier à ces inconvénients en proposant un nouveau véhicule routier qui améliore sensiblement l'acceptation de manœuvres autonomes du véhicule routier par la personne transportée.

L'invention a pour objet un véhicule routier, comprenant un automate de conduite, qui est configuré pour conduire le véhicule routier selon des manœuvres autonomes. Selon l'invention, le véhicule routier comprend en outre : un calculateur d'acceptabilité, qui est configuré pour, à un instant considéré où l'automate de conduite a prévu de conduire le véhicule routier selon une nouvelle manœuvre autonome, déterminer un index d'acceptabilité de ladite nouvelle manœuvre autonome, en fonction d'une donnée d'intention de manœuvre fournie au calculateur d'acceptabilité par l'automate de conduite et reflétant la nouvelle manœuvre autonome ; un calculateur d'acceptation, qui est configuré pour, audit instant considéré, déterminer un index d'acceptation attribué à une personne transportée par le véhicule routier, en fonction de l'index d'acceptabilité déterminé par le calculateur d'acceptabilité et en fonction : d'un niveau d'attention de la personne audit instant considéré, déterminé par un module de surveillance, surveillant ladite personne audit instant considéré et appartenant au véhicule routier et d'un niveau d'implication de la personne dans la conduite du véhicule routier, audit instant considéré ; et un avertisseur, qui est configuré pour émettre un signal à l'attention de ladite personne audit instant considéré, en fonction de la valeur de l'index d'acceptation, en particulier seulement si l'index d'acceptation atteint un seuil de déclenchement.

Une idée à la base de l'invention est de prévenir, si nécessaire, la personne transportée, à l'aide du signal émis par l'avertisseur, que le véhicule routier met en œuvre la nouvelle manœuvre autonome, ou va très prochainement mettre en œuvre la nouvelle manœuvre autonome. Cela permet d'accroître sensiblement l'acceptation de cette nouvelle manœuvre par la personne, qui, ainsi prévenue, est moins surprise et/ou a la possibilité de comprendre les motifs ayant conduit à la mise en œuvre d'une telle manœuvre autonome. La personne ainsi prévenue a éventuellement la possibilité de prendre certaines dispositions, telles que se cramponner au véhicule routier. Pour éviter que de trop nombreux signaux ne soient émis à l'attention de la personne, le signal n'est émis que lorsque cela est nécessaire, c'est-à-dire seulement si la personne est susceptible de mal accepter la nouvelle manœuvre autonome. On détermine que l'émission du signal est nécessaire en fonction de l'index d'acceptation déterminé pour cette personne. Une quantité réduite de signaux évite de saturer la personne d'informations. La personne a donc la possibilité de mieux interpréter les signaux reçus et donc de mieux accepter la nouvelle manœuvre autonome.

On détermine qu'il convient d'informer ou d'alerter la personne en fonction de la valeur de l'index d'acceptation. Cet index d'acceptation est un indicateur qui renseigne sur le fait que la personne est susceptible ou non d'accepter la nouvelle manœuvre autonome selon laquelle l'automate prévoit de conduire le véhicule routier. Par exemple, la valeur de l'index d'acceptation est un nombre compris entre 0 et 10. Par exemple, les valeurs les plus faible de l'index d'acceptation correspondent à une situation où la personne est peu, voire n'est pas, susceptible d'accepter la nouvelle manœuvre autonome, alors que les valeurs les plus élevées correspondent à une situation où la personne va probablement ou certainement accepter la nouvelle manœuvre autonome. En d'autres termes, l'index d'acceptation concerne le fait de savoir si la personne est dans de bonnes dispositions pour être soumise à la nouvelle manœuvre autonome.

La détermination de l'index d'acceptation par le calculateur d'acceptation est basée sur plusieurs paramètres. L'un de ces paramètres est l'index d'acceptabilité de la nouvelle manœuvre autonome. Cet index d'acceptabilité est un indicateur qui renseigne sur le fait que la nouvelle manœuvre autonome est plus ou moins facile à accepter par une personne transportée par le véhicule. Par exemple, la valeur de l'index d'acceptabilité est un nombre compris entre 0 et 10. Par exemple, les valeurs les plus élevées de l'index d'acceptabilité correspondent au cas où la nouvelle manœuvre autonome est douce et progressive, tel qu'un simple changement de voie, alors que les valeurs les plus faibles correspondent au cas où la nouvelle manœuvre autonome est brusque ou violente, tel qu'un freinage d'urgence. En d'autres termes, l'index d'acceptabilité de la nouvelle manœuvre autonome illustre un niveau d'acceptabilité de la nouvelle manœuvre autonome, qui dépend par exemple du degré de brutalité de cette nouvelle manœuvre autonome et/ou de la difficulté qu'une personne aurait à comprendre ou accepter les motifs conduisant à la mise en œuvre de la nouvelle manœuvre. L'index d'acceptabilité est déterminé par le calculateur d'acceptabilité grâce à la donnée d'intention de manœuvre fournie par l'automate de conduite, cette donnée étant une information qui décrit la nouvelle manœuvre autonome, en indiquant par exemple le type de manœuvre autonome et ses caractéristiques.

D'autres paramètres pour la détermination de l'index d'acceptation sont le niveau d'attention que la personne alloue à l'environnement de conduite du véhicule routier et le niveau d'implication de la personne dans la conduite du véhicule routier.

Des caractéristiques optionnelles et avantageuses de l'invention sont définies ci-dessous.

De préférence, le module de surveillance comprend un capteur de suivi du regard et/ou de la posture et/ou des mouvements et/ou des expressions faciales de la personne surveillée, afin de déterminer le niveau d'attention de ladite personne.

De préférence, le véhicule routier est configuré pour basculer entre un mode de conduite autonome avec supervision par la personne et un mode de conduite autonome sans supervision par la personne. De préférence, le calculateur d'acceptation détermine le niveau d'implication de la personne en déterminant si, audit instant considéré, le véhicule routier est en mode de conduite autonome avec supervision par ladite personne ou en mode de conduite autonome sans supervision par ladite personne.

De préférence, le véhicule routier est configuré pour basculer vers un mode de conduite manuelle dans lequel la personne conduit le véhicule routier selon des manœuvres manuelles, par action de la personne sur une commande de conduite du véhicule routier. De préférence, le calculateur d'acceptation détermine le niveau d'implication de la personne en déterminant si, audit instant considéré, le véhicule routier est en mode de conduite manuelle.

De préférence, le calculateur d'acceptabilité comprend une mémoire qui répertorie des scénarios de manœuvre autonome paramétrisés avec des paramètres, et, pour chaque scénario, un calcul de détermination de l'index d'acceptabilité en fonction des paramètres. De préférence, pour déterminer l'index d'acceptabilité, le calculateur d'acceptabilité est configuré pour : en fonction de la donnée d'intention de manœuvre, identifier un scénario, parmi les scénarios répertoriés, qui s'applique à la nouvelle manœuvre autonome ; déterminer la valeur des paramètres du scénario identifié pour que le scénario identifié soit comparable à la nouvelle manœuvre autonome ; effectuer le calcul de détermination de l'index d'acceptabilité à l'aide de la valeur des paramètres ainsi déterminés.

De préférence, l'avertisseur est configuré pour que le signal émis à l'attention de la personne, soit émis selon des modalités qui dépendent d'au moins l'un des éléments suivants : le scénario de manœuvre autonome identifié par le calculateur d'acceptabilité ; l'index d'acceptabilité déterminé par le calculateur d'acceptabilité ; l'index d'acceptation déterminé par le calculateur d'acceptation.

De préférence, l'avertisseur appartient à une interface homme-machine du véhicule routier.

De préférence, l'avertisseur est configuré pour débuter l'émission du signal avant que ne débute la nouvelle manœuvre autonome.

De préférence, les manœuvres autonomes comprennent au moins l'une des manœuvres suivantes : un freinage d'urgence ; un évitement d'obstacle ; un changement de voie ; un maintien dans la voie ; une gestion de distance entre le véhicule routier et un autre véhicule.

L'invention a également pour objet un procédé de conduite autonome du véhicule routier conforme à ce qui précède. Le procédé comprend : à l'aide de l'automate de conduite, fournir la donnée d'intention de manœuvre au calculateur d'acceptabilité, reflétant la nouvelle manœuvre autonome selon laquelle l'automate de conduite a prévu de conduire le véhicule routier à l'instant considéré ; audit instant considéré, à l'aide du calculateur d'acceptabilité, déterminer l'index d'acceptabilité de ladite nouvelle manœuvre autonome en fonction de la donnée d'intention de manœuvre ; audit instant considéré, déterminer le niveau d'attention de la personne à l'aide du module de surveillance et le niveau d'implication de la personne à l'aide du calculateur d'acceptation ; à l'aide du calculateur d'acceptation, déterminer l'index d'acceptation en fonction de l'index d'acceptabilité et en fonction du niveau d'attention déterminé et du niveau d'implication déterminé ; à l'aide de l'avertisseur, émettre le signal à l'attention de ladite personne en fonction de la valeur de l'index d'acceptation, en particulier seulement si l'index d'acceptation atteint un seuil de déclenchement.

L'invention sera mieux comprise à la lecture de la description qui suit, donnée uniquement à titre d'exemple non limitatif et faite en se référant au dessin annexé.

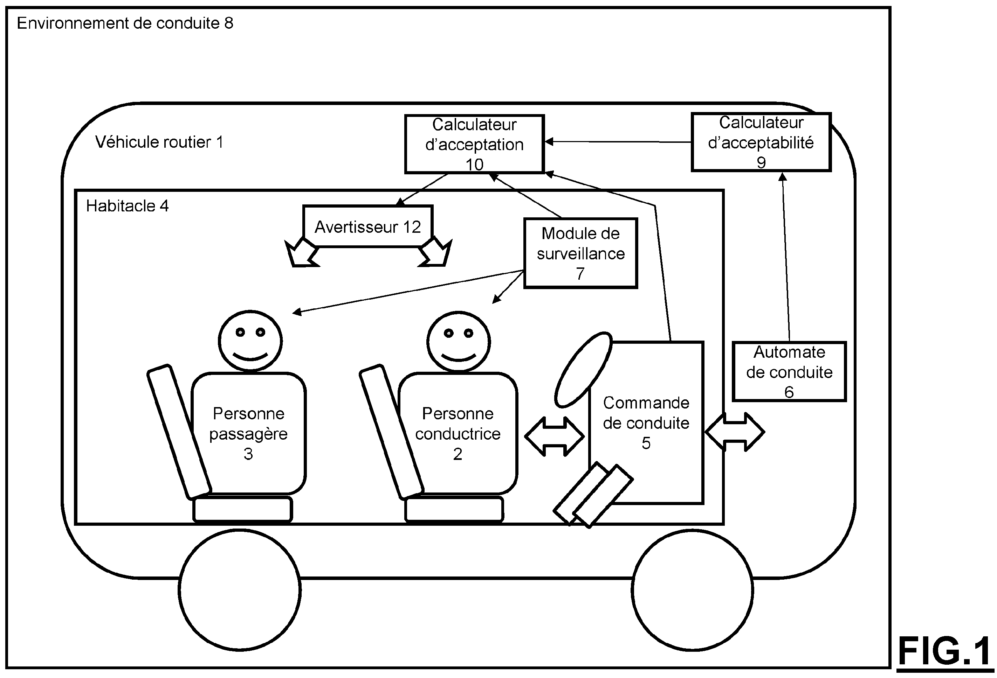

[Fig 1] La figure 1 est une vue schématique d'un véhicule routier selon un mode de réalisation conforme à l'invention.

La figure 1 montre un véhicule routier 1, qui peut se présenter par exemple sous la forme d'une automobile, d'un autobus, d'un autocar, d'un camion, d'un deux roues, ou tout autre type de véhicule routier. Le véhicule routier 1 est automoteur et comprend à cet effet un moteur embarqué, actionnant un moyen de roulage du véhicule sur la route, tel que des roues appartenant au véhicule. Plus généralement, par « véhicule routier », on entend un véhicule terrestre, apte à se déplacer au moins sur une route, plus généralement sur le sol, de préférence par roulage du véhicule routier.

Le véhicule 1 évolue dans un environnement de conduite 8, c'est-à-dire à une situation de conduite dans laquelle se trouve le véhicule 1, constituant l'environnement extérieur autour du véhicule 1, incluant par exemple une route, une signalisation, des obstacles et/ou d'autres véhicules.

Le véhicule routier 1 est un véhicule autonome prévu pour transporter au moins une personne, voire plusieurs.

Le véhicule routier 1 comprend une commande de conduite 5, un automate de conduite 6 et un module de surveillance 7.

La commande de conduite 5, lorsqu'elle est actionnée, sert à diriger le véhicule 1 selon une manœuvre. Pour cela, la commande de conduite 5 commande des organes de conduite du véhicule 1, tels qu'un moteur, un train de direction et/ou un organe de freinage du véhicule. Autrement dit, par l'intermédiaire des organes de conduite, la commande de conduite 5 produit un effet substantiel sur la conduite du véhicule au sein de son environnement de conduite 8, tenant notamment à sa mobilité, notamment par opposition à une commande auxiliaire du véhicule 1, incluant par exemple une commande d'air conditionné, d'éclairage ou d'ouverture d'une portière du véhicule 1.

De préférence, la commande de conduite 5 comprend une commande de gestion de la trajectoire du véhicule routier. La commande de gestion de la trajectoire commande en particulier le train de direction du véhicule 1, qui est un organe de conduite réglant par exemple une orientation des roues du véhicule 1 en lacet. La commande de gestion de la trajectoire détermine donc la trajectoire du véhicule 1 lors de son déplacement, par exemple selon une courbe, ou selon une ligne droite.

De préférence, la commande de conduite 5 comprend une commande de mise en accélération du véhicule routier. La commande de mise en accélération commande en particulier le moteur du véhicule 1, qui est un organe de conduite produisant une puissance motrice appliquée par exemple sur les roues du véhicule 1, pour produire une accélération ou un maintien de la vitesse du véhicule 1. La commande de conduite 5 permet alors de faire augmenter ou de maintenir la vitesse du véhicule, notamment vers l'avant ou vers l'arrière.

De préférence, la commande de conduite 5 comprend une commande de mise en décélération du véhicule routier. La commande de mise en décélération commande en particulier un système de freinage et/ou de récupération d'énergie cinétique du véhicule 1, qui sont des organes de conduite du véhicule 1 produisant une décélération du véhicule 1, alors que le véhicule 1 se déplace en direction avant ou arrière à vitesse non nulle.

Pour actionner les organes de conduite, la commande de conduite 5 comprend des moyens de commande électronique et/ou mécaniques des organes de conduite.

La commande de conduite 5 est configurée pour être elle-même actionnée par l'automate de conduite 6 pour faire effectuer des manœuvres dites autonomes au véhicule 1, et éventuellement par une personne conductrice 2 du véhicule 1 pour faire effectuer des manœuvres dites manuelles au véhicule 1. Qu'elle soit autonome ou manuelle, la manœuvre s'entend comme la façon dont on conduit le véhicule 1, c'est-à-dire en particulier dont on règle son déplacement et sa trajectoire dans l'environnement de conduite 8. Par exemple, les manœuvres comprennent un freinage d'urgence du véhicule routier 1, un évitement d'obstacle présent dans l'environnement de conduite 8 par le véhicule routier 1, un changement de voie du véhicule routier 1 parmi des voies d'une route appartenant à l'environnement de conduite 8, un maintien dans la voie du véhicule routier 1 parmi des voies d'une route appartenant à l'environnement de conduite 8, et/ou une gestion de distance entre le véhicule routier et un autre véhicule appartenant à l'environnement de conduite 8, que cet autre véhicule soit notamment prédécesseur, suiveur, ou latéral vis-à-vis du véhicule 1.

Pour être actionnée par l'automate 6, la commande de conduite 5 comprend par exemple un port d'entrée électronique configuré pour recevoir des ordres émanant d'un port de sortie de l'automate 6. Pour être actionnée par la personne 2, la commande de conduite 5 comprend par exemple des manettes, telles qu'un volant et/ou des pédales, configurées être actionnées par la personne 2. Selon la situation, la commande 5 commande les organes de conduite en fonction des ordres reçus par l'automate 6 depuis le port d'entrée ou par la personne 2 depuis les manettes.

L'automate de conduite 6 est une unité de commande automatique, qui est configuré pour actionner la commande de conduite 5 de façon automatique. C'est donc par l'intermédiaire de la commande 5 que l'automate 6 conduit le véhicule 1 selon des manœuvres autonomes. L'automate de conduite 6 comprend par exemple un ordinateur mettant en œuvre un programme informatique, éventuellement complémenté par un système de connexion à un réseau sans fil par l'intermédiaire duquel l'ordinateur reçoit des ordres émis à distance quant à la conduite du véhicule 1. Cet ordinateur peut actionner la commande de conduite 5 par l'intermédiaire du port de sortie de l'automate 6.

Pour que l'automate de conduite 6 puisse conduire le véhicule 1 en fonction de l'environnement de conduite 8 dudit véhicule 1, le véhicule 1 comprend avantageusement différents capteurs de l'environnement de conduite 8. Ces capteurs permettent par exemple de détecter et/ou déterminer les autres véhicules, la route, les obstacles, la signalisation et/ou la géolocalisation, qui sont des données appartenant à l'environnement de conduite 8. Ces capteurs incluent par exemple des capteurs optiques, radar, et/ou de géolocalisation. Le véhicule 1 comprend également des capteurs concernant des caractéristiques du véhicule 1 en lui-même, par exemple concernant la vitesse, le régime moteur, ou encore l'état de certains composants du véhicule 1. Tous ces capteurs sont interfacés avec l'automate de conduite 6, pour fournir à l'automate de conduite 6 une perception suffisante de l'état du véhicule 1 et de l'environnement de conduite 8 du véhicule 1. L'automate 6 peut donc analyser l'environnement de conduite 8 dans laquelle se trouve le véhicule 1 et conduire le véhicule 1 selon les manœuvres autonomes en fonction de toutes ces informations, à la façon d'une personne conductrice.

La figure 1 montre que le véhicule routier 1 transporte la personne conductrice 2 et une personne passagère 3. Les personnes 2 et 3 sont par exemple transportées en étant installées dans un habitacle 4 du véhicule 1, en étant assises sur un siège individuel du véhicule 1. Toutefois, l'installation des personnes dépend du type de véhicule souhaité. Par exemple, le véhicule 1 peut être dépourvu de sièges et/ou d'habitacle, l'installation des personnes étant effectuée selon d'autres postures et/ou en extérieur.

La personne conductrice 2 est préférentiellement à un poste de conduite du véhicule 1, ici dans l'habitacle 4, ce qui lui donne accès aux manettes de la commande de conduite 5. Par « personne conductrice », on entend une personne désignée comme responsable de la conduite du véhicule 1, apte à conduire elle-même le véhicule par action sur la commande de conduite 5 selon des manœuvres manuelles, ou pour le moins à superviser l'automate de conduite 6 pour les manœuvres autonomes, de préférence via la commande de conduite 5.

De préférence, la personne passagère 3 est installée à un poste depuis lequel elle n'a pas accès aux manettes de la commande de conduite 5.

On peut prévoir que le véhicule 1 soit toujours conduit de façon autonome par l'automate 6 sans supervision par la ou les personne(s) à bord, de sorte que la présence d'une personne conductrice 2 ne soit pas nécessaire. Toutefois, le véhicule 1 reste dévolu au transport d'au moins une personne, alors nécessairement passagère. Plus généralement, on peut prévoir que le véhicule 1 transporte une ou plusieurs personnes, qui ne sont pas nécessairement conductrices.

Dans le présent exemple, le véhicule 1 met préférentiellement en œuvre un mode de conduite autonome sans supervision, dans lequel la commande de conduite 5 est actionnée par l'automate 6 sans supervision par la ou les personnes à bord, c'est-à-dire sans nécessité pour ces personnes de surveiller la conduite du véhicule 1 par l'automate 6. En mode de conduite autonome sans supervision, la conduite est effectuée entièrement par l'automate 6 hors de la responsabilité de toute personne à bord du véhicule 1.

Dans le présent exemple, le véhicule 1 met préférentiellement en œuvre un mode de conduite autonome avec supervision, outre celui sans supervision. En mode de conduite autonome avec supervision, la commande de conduite 5 est actionnée par l'automate 6, sous la supervision, c'est-à-dire la vérification de la personne conductrice 2. On note que la personne passagère 3 n'a pas la charge de cette supervision. La présence du mode de conduite autonome avec supervision exige la présence d'au moins une personne conductrice à bord du véhicule 1. Dans ce mode, il peut être exigé que la personne conductrice 2 alloue de l'attention à l'environnement de conduite 8, ce qui peut optionnellement être vérifié par le véhicule 1 à l'aide du module de surveillance 7. Dans ce mode de conduite, la personne 2 n'agit pas elle-même sur la commande 5, mais se tient prête à agir sur la commande de conduite 5 pour interrompre une manœuvre autonome ou modifier ses caractéristiques. En mode de conduite autonome avec supervision, la conduite est donc effectuée par l'automate 6 sous la responsabilité de la personne conductrice 2.

Outre le ou les mode(s) de conduite autonome, la commande de conduite 5 met préférentiellement en œuvre un mode de conduite manuelle, dans lequel la personne conductrice 2 conduit manuellement le véhicule routier 1 à l'aide de la commande de conduite 5, de sorte à faire effectuer des manœuvres manuelles audit véhicule routier 1. On note que la mise en œuvre du mode de conduite manuelle nécessite la présence d'au moins une personne conductrice 2 à bord du véhicule. On note également que la ou les personnes passagères ne sont pas en charge de la conduite du véhicule en mode de conduite manuelle. Dans le mode de conduite manuelle, la personne conductrice 2 actionne la commande de conduite via les manettes de la commande de conduite 5, incluant par exemple un volant de direction, une pédale d'accélération et une pédale de décélération ou de frein. Le mode de conduite manuelle peut être un mode de conduite manuelle supervisé par l'automate 6, c'est-à-dire un mode de conduite où la conduite est entièrement assurée par la personne conductrice 2, mais où l'automate de conduite 6 peut à tout moment faire basculer la commande de conduite 5 en mode de conduite autonome pour effectuer une manœuvre autonome, par exemple si un défaut d'attention de la personne 2, une erreur de conduite de la personne 2, ou encore une situation dangereuse de l'environnement de conduite 8, est détecté. Le mode de conduite manuelle peut être un mode de conduite manuelle sans supervision de la part de l'automate 6, où l'automate 6 n'intervient pas de son propre chef sur la conduite exercée par la personne 2.

Le mode de conduite manuelle et les manœuvres manuelles effectuées avec correction automatique par des dispositifs de sécurité active, tels qu'un système de correction de trajectoire ou de stabilité du véhicule 1, ou encore un système antiblocage des roues lors du freinage, sont tout de même considérées comme des manœuvres manuelles. Ce genre de dispositif de sécurité active ne constitue pas un automate de conduite, mais simplement un correcteur de conduite manuelle.

Le module de surveillance 7 est configuré pour surveiller un niveau d'attention par les personnes 2 et 3 à bord. De préférence, le module de surveillance 7 est un module de surveillance de la personne conductrice 2. Toutefois, le module de surveillance 7 peut être un module de surveillance de la personne passagère 3. On peut prévoir que le module de surveillance 7 surveille plusieurs personnes à bord du véhicule 1, ou toutes les personnes à bord du véhicule 1.

Le niveau d'attention est un indicateur qui reflète l'attention que porte la personne surveillée par le module 7 à l'environnement de conduite 8 du véhicule 1 et/ou aux manœuvres effectuées par le véhicule 1. Par exemple, la valeur du niveau d'attention est un nombre compris entre 0 et 10. Par exemple, lorsque la personne a le niveau d'attention dont la valeur est élevée, cette personne est en pleine conscience de l'environnement de conduite 8, et a identifié, parmi l'environnement 8, les éléments suffisants qui permettraient à cette personne de conduire manuellement le véhicule 1 en toute sécurité, ces éléments incluant notamment le tracé de la route, la signalisation, la présence d'obstacle, de piétons, d'autres véhicules, la trajectoire de ces autres véhicules, plus généralement la présence de dangers, ou encore l'itinéraire à suivre avec le véhicule 1 pour atteindre une destination donnée, etc. Au contraire, lorsque la valeur du niveau d'attention est moins élevée, cette personne n'a pas ou peu conscience de l'environnement de conduite 8. Les valeurs les plus faibles de niveau d'attention concernent par exemple les cas où la personne surveillée par le module 7 est entièrement concentrée sur une autre activité que la conduite, telle que la lecture d'un livre, telle qu'une conversation téléphonique, telle qu'une conversation avec une autre personne à bord du véhicule 1, ou encore le cas où la personne surveillée par le module 7 est endormie ou autrement inconsciente. Des valeurs intermédiaires du niveau d'attention correspondent par exemple à des cas où la personne surveillée jette un œil de temps à autre sur l'environnement de conduite 8, de sorte qu'elle n'a pas conscience que d'une partie des éléments de l'environnement de conduite 8. Cette situation peut aussi se produire lorsque la personne est somnolente.

Pour surveiller le niveau d'attention de la personne 2 et/ou de la personne 3, le module de surveillance 7 comprend préférentiellement un capteur de suivi du regard et/ou de la posture et/ou des mouvements et/ou des expressions faciales de chaque personne 2 ou 3 surveillée. Ce capteur inclut par exemple un ou plusieurs capteurs optiques pointés sur la personne surveillée, ainsi qu'un module de traitement des images émanant de ces capteurs optiques. Dans le cas où le regard est suivi, le traitement des images permet d'analyser dans quelle direction est dirigé le regard, et/ou si les yeux de la personne sont ouverts ou fermés. Le même genre d'information peut être déterminée dans le cas où l'expression faciale est suivie, de sorte que l'on peut déterminer le niveau d'attention que porte la personne à l'environnement de conduite 8. Dans le cas où la posture est suivie, le traitement d'image permet de déterminer la posture de la personne, assise de façon tonique face à l'environnement de conduite 8, ou au contraire avec la tête basculée signe d'endormissement, ou penchée vers l'avant pour saisir un objet au sol du véhicule 1 ou dans une boîte à gants du véhicule 1, ou de dos, par exemple en étant retournée vers l'arrière pour converser avec une autre personne à bord du véhicule, ou toute autre posture susceptible d'être dangereuse en cas de manœuvre automatique brutale du véhicule 1. Un suivi de mouvement de la personne peut permettre de déterminer le même genre d'informations concernant la personne, reflétant son niveau d'attention à l'environnement de conduite 8. Le traitement d'image peut par exemple permettre de déterminer si la personne est cramponnée au véhicule 1, ou ne se tient pas et risque de tomber si une manœuvre brusque est mise en œuvre. Pour contribuer à surveiller toutes ces informations concernant la personne, on peut aussi prévoir que le capteur de suivi comprend d'autres types de capteurs, par exemple des capteurs haptiques, qui peuvent notamment équiper un siège du véhicule 1 sur lequel la personne est assise, ou équiper des manettes de la commande de conduite 5. Grâce à ces moyens ou à d'autres moyens assurant la même fonction, le capteur de suivi vérifie si la personne surveillée scrute activement des éléments de l'environnement de conduite 8, ou au contraire regarde autre chose sans lien avec l'environnement de conduite 8, ou encore si les yeux de la personne sont ouverts ou fermés. On peut aussi prévoir que le capteur de suivi vérifie si la personne a détecté certains éléments notoires de l'environnement de conduite 8, par exemple un obstacle ou un autre véhicule appartenant à l'environnement de conduite 8, en croisant des informations fournies par les capteurs dirigés sur la personne concernant son regard et des informations fournies par des capteurs destinés à l'automate de conduite 6 et détectant l'environnement de conduite 8.

Le module de surveillance 7 peut comprendre encore d'autres types de capteurs pour déterminer le niveau d'attention de la personne surveillée, par exemple un capteur de température corporelle de la personne.

Pour déterminer le niveau d'attention de la personne surveillée, le module de surveillance 7 peut aussi comprendre un dispositif homme-mort. Ce type de dispositif inclut par exemple un bouton ou autre organe haptique similaire, à disposition de la personne surveillée, et dont l'actionnement par la personne selon un schéma prédéterminé permet de témoigner d'un haut niveau d'attention de sa part. En l'absence d'actionnement de cet organe par la personne, ou si un actionnement selon un schéma erroné est effectué, il est conclu que le niveau d'attention de la personne est faible ou nul.

Le véhicule routier 1 comprend en outre un calculateur d'acceptabilité 9, un calculateur d'acceptation 10 et un avertisseur 12. Ces dispositifs visent, si nécessaire, à émettre un signal à l'attention des personnes 2 et/ou 3, lorsque l'automate 6 prévoit de mettre en œuvre une nouvelle manœuvre autonome. Ainsi, on s'assure que les personnes 2 et 3 seront dans de bonnes dispositions pour accepter la nouvelle manœuvre autonome qui va être mise en œuvre, ou dont la mise en œuvre a déjà débuté, notamment en n'étant pas surpris et/ou en ayant compris l'intérêt de cette nouvelle manœuvre autonome.

L'automate de conduite 6 décide à un « instant considéré » qu'il va conduire le véhicule 1 selon la nouvelle manœuvre autonome, en fonction des informations qu'il a reçues de l'environnement de conduite 8 via les différents capteurs équipant le véhicule 1.

Le calculateur d'acceptabilité 9 vise à déterminer un index d'acceptabilité, dont la valeur dépend entièrement de cette nouvelle manœuvre autonome. Le calculateur d'acceptation 10 vise à déterminer un index d'acceptation, qui est propre à chaque personne 2 et 3 à bord pour un instant donné. L'index d'acceptation est avantageusement individuel pour chaque personne ou groupe de personne à bord. On peut choisir de déterminer l'index d'acceptation d'une seule personne ou de plusieurs personnes à bord.

Chaque nouvelle manœuvre autonome revêt en elle-même un caractère plus ou moins acceptable par toute personne, ce qui est illustré par l'index d'acceptabilité affecté à ladite manœuvre autonome. L'index d'acceptabilité est un indicateur qui renseigne sur le fait que la nouvelle manœuvre autonome est plus ou moins facile à accepter par toute personne transportée par le véhicule, ou par une personne particulière, par exemple en fonction du fait que cette personne a le statut de personne conductrice ou de personne passagère. Par exemple, la valeur de l'index d'acceptabilité est un nombre compris entre 0 et 10. En particulier, la manœuvre autonome présente une valeur d'index d'acceptabilité plus faible si cette manœuvre est brusque ou violente, en soumettant par exemple le véhicule 1 à de fortes accélérations ou secousses longitudinales et/ou latérales, et/ou si cette manœuvre a toute conséquence considérée comme indésirable par la personne, par exemple un retard sur l'itinéraire prévu ou le fait de causer un incident ou un accident impliquant le véhicule 1, ce qui peut être souhaitable pour préserver le véhicule 1 ou son environnement 8 d'un incident ou accident plus grave. La manœuvre autonome présente une valeur d'index d'acceptabilité plus élevé si cette manœuvre autonome est progressive et entraine peu de secousses, et/ou si cette manœuvre autonome n'a aucune conséquence sur l'intégrité du véhicule 1 et de l'environnement 8.

Le calculateur d'acceptabilité 9 comprend par exemple un ordinateur embarqué sur le véhicule 1, mettant en œuvre un programme informatique. Le calculateur d'acceptabilité 9 est connecté à l'automate de conduite 6, par exemple à l'aide de ports de données approprié. Le calculateur d'acceptabilité 9 débute la détermination de l'index d'acceptabilité pour la nouvelle manœuvre autonome, à partir de l'instant considéré où l'automate 6 a décidé qu'il allait conduire le véhicule 1 selon cette nouvelle manœuvre autonome. Par l'expression « détermination », on entend que le calculateur d'acceptabilité 9 calcul ou évalue. Cette décision est prise avant le début de ladite nouvelle manœuvre autonome ou alors, la manœuvre nouvelle autonome est débutée immédiatement lorsque la décision est prise par l'automate 6.

Plus précisément, on prévoit que l'automate 6 fournit une donnée d'intention de manœuvre au calculateur d'acceptabilité 9, en fonction de laquelle le calculateur d'acceptabilité détermine l'index d'acceptabilité. Cette donnée d'intention de manœuvre est avantageusement transmise via les ports de données reliant le calculateur 9 et l'automate 6. La donnée d'intention de manœuvre est générée comme une sortie de l'automate 6, et décrit ou renseigne sur la nouvelle manœuvre autonome dont la mise en œuvre est prévue par l'automate 6. Par exemple, cette donnée d'intention de manœuvre est un message indiquant le type dont relève la nouvelle manœuvre autonome ainsi que les caractéristiques que l'automate 6 a décidé pour cette nouvelle manœuvre autonome, par exemple en ce qui concerne l'intensité de l'accélération ou de la décélération longitudinale, et en ce qui concerne l'intensité de l'accélération latérale, à différents stades de la manœuvre autonome.

De préférence, le calculateur d'acceptabilité 9 comprend une mémoire qui répertorie des scénarios de manœuvre autonome, c'est-à-dire des modèles de manœuvres autonomes susceptibles d'être mis en œuvre par l'automate de conduite 6 avec le véhicule 1. La mémoire appartient par exemple à l'ordinateur du calculateur d'acceptabilité 9.

Les scénarios de manœuvre autonome sont préenregistrés, et ont été élaborés à l'avance, par exemple sur la base de simulations de manœuvres en laboratoire et/ou sur la base d'un apprentissage automatique de l'automate durant la conduite et/ou sur la base de tests effectués sur un véhicule type embarquant une personne constituant un pilote d'essai, ou plus généralement une personne témoin.

De préférence, des scénarios de manœuvre autonome sont paramétrisés avec des paramètres, c'est-à-dire que chaque scénario se présente sous la forme d'un modèle dont les caractéristiques peuvent être modifiées en modifiant la valeur desdits paramètres, pour que le modèle ainsi configuré corresponde le mieux possible à la nouvelle manœuvre autonome qui va être mise en œuvre.

Un exemple de manœuvre autonome est un freinage d'urgence. La mémoire répertorie en particulier un scénario de freinage d'urgence, qui est paramétrisé avec des paramètres qui comprennent par exemple la valeur d'un effort de freinage au cours du temps, ou l'accélération longitudinale du véhicule 1 au cours du temps du fait de l'intensité du freinage. En fonction de la valeur de l'effort de freinage ou de l'accélération longitudinale dans le temps, la valeur de l'index d'acceptabilité sera plus ou moins élevée. En particulier, la valeur de l'index d'acceptabilité sera plus faible pour un freinage fort que pour un freinage faible.

La mémoire répertorie aussi, pour chaque scénario de manœuvre autonome paramétrisée, un calcul de détermination de la valeur de l'index d'acceptabilité en fonction des paramètres. En d'autres termes, la mémoire indique comment calculer l'index d'acceptabilité lorsque l'on connait le scénario de manœuvre autonome et ses paramètres. Dans ce cas, pour déterminer la valeur de l'index d'acceptabilité de la nouvelle manœuvre autonome qui va ou qui est effectuée par l'automate 6, le calculateur d'acceptabilité 9 identifie quel scénario, parmi les scénarios répertoriés dans la mémoire, correspond le mieux à la nouvelle manœuvre autonome. Pour cela par exemple, la donnée d'intention de manœuvre fournie par l'automate 6 au calculateur 9 traduit que l'automate 6 prévoit de mettre en œuvre, en tant que nouvelle manœuvre autonome, un freinage d'urgence. Le calculateur d'acceptabilité identifie alors, parmi les scénarios enregistrés dans la mémoire, le scénario d'un freinage d'urgence. Le calculateur d'acceptabilité 9 détermine ensuite la valeur des paramètres du scénario identifié pour que ledit scénario soit comparable à la nouvelle manœuvre autonome effectivement mise en œuvre par l'automate. Dans le cas d'exemple du freinage d'urgence, la donnée d'intention de manœuvre contient les valeurs d'effort de freinage au cours du temps que l'automate 6 souhaite impartir au véhicule 1 via la commande de conduite 5. Le calculateur 9 entre alors ces valeurs comme paramètres du scénario identifié. Enfin, le calculateur 9 effectue le calcul de détermination de la valeur de l'index d'acceptabilité, qui est répertorié dans la mémoire pour le scénario identifié par le calculateur 9. Pour effectuer ce calcul, les paramètres fournis par l'automate 6, à l'aide de la donnée d'intention de manœuvre, sont utilisés par le calculateur 9 comme variables d'entrée du calcul.

En variante, on peut prévoir que tout ou partie des scénarios répertoriés dans la mémoire ne sont pas paramétrisés. Pour chaque scénario non paramétrisé, la mémoire peut répertorier simplement, de façon prédéterminée, la valeur de l'index d'acceptabilité correspondant à ce scénario, plutôt que le calcul susmentionné. Alors, une fois le scénario identifié par le calculateur 9, la valeur de l'index d'acceptabilité est déterminée par le calculateur 9 simplement par consultation de la valeur préenregistrée dans la mémoire, associée au scénario identifié.

La valeur de l'index d'acceptation est attribuée individuellement pour chaque personne 2 et 3, à un instant donné. La valeur de l'index d'acceptation de cette personne illustre l'état d'acceptation, c'est-à-dire l'état d'esprit de la personne concernée à un instant donné. La valeur de l'index d'acceptation reflète donc les chances pour que cette personne accepte une nouvelle manœuvre autonome décidée par l'automate 6 à l'instant considéré. En d'autres termes, cet index d'acceptation est un indicateur qui renseigne sur le fait que la personne est susceptible ou non d'accepter la nouvelle manœuvre autonome selon laquelle l'automate prévoit de conduire le véhicule routier. Par exemple, la valeur de l'index d'acceptation est un nombre compris entre 0 et 10. De préférence, plus la valeur de l'index d'acceptation d'une personne est élevée, plus cette personne devrait normalement accepter la nouvelle manœuvre autonome lorsqu'elle se produira. Au contraire, plus la valeur de l'index d'acceptation de la personne est faible, moins il y a de chances que cette personne accepte la nouvelle manœuvre autonome lorsqu'elle se produira.

Le calculateur d'acceptation 10 comprend par exemple un ordinateur embarqué sur le véhicule 1, mettant en œuvre un programme informatique. Le calculateur d'acceptation 10 est connecté au calculateur d'acceptabilité 9. Le calculateur d'acceptation 10 est préférentiellement connecté au module de surveillance 7. Le calculateur d'acceptation 10 est préférentiellement connecté à la commande de conduite 5 et/ou à l'automate 6. Ces connexions sont par exemple obtenues à l'aide de ports de données appropriés reliant les éléments entre eux.

Le calculateur d'acceptation 10 débute la détermination de la valeur de l'index d'acceptation de la personne concernée à partir de l'instant considéré où l'automate 6 a décidé qu'il allait conduire le véhicule selon la nouvelle manœuvre autonome susmentionnée. Pour calculer la valeur de l'index d'acceptation de la personne considérée, par exemple de la personne conductrice 2 ou de la personne passagère, le calculateur d'acceptation 10 prend en compte non seulement la valeur de l'index d'acceptabilité déterminée par le calculateur d'acceptabilité 9 pour la nouvelle manœuvre autonome, mais aussi la valeur du niveau d'attention de cette personne à l'instant considéré déterminé par le module de surveillance 7. De surcroit à cette valeur de niveau d'attention, le calculateur d'acceptation 10 tient compte d'une valeur de niveau d'implication de la personne dans la conduite du véhicule 1 à l'instant considéré. Cette valeur de niveau d'implication est déterminée par le calculateur d'acceptation 10, par exemple sur la base de données fournies au calculateur d'acceptation 10 par la commande de conduite 5 et/ou par l'automate 6.

Le calcul de l'index d'acceptation effectué par le calculateur d'acceptation 10 comporte, comme donnée d'entrée, la valeur de l'index d'acceptabilité déterminée par le calculateur d'acceptabilité 9, à l'instant considéré. Pour cela, l'index d'acceptabilité est avantageusement fourni au calculateur d'acceptation 10 par le calculateur d'acceptabilité 9, via les ports de données les reliant. En d'autres termes, le calcul de l'index d'acceptation pour chaque personne est effectué en fonction de l'index d'acceptabilité attribué à la nouvelle manœuvre autonome qui est prévue par l'automate 6.

De préférence, le calcul de l'index d'acceptation effectué par le calculateur d'acceptation 10 comporte, comme donnée d'entrée, la valeur du niveau d'attention de la personne en question, à l'instant considéré, tel que déterminée par le module de surveillance 7. Pour cela, le niveau d'attention est avantageusement fourni au calculateur d'acceptation 10 par le module de surveillance 7 à l'aide des ports de données les reliant. La valeur de l'index d'acceptation attribué à la personne est alors calculée par le calculateur 10 notamment en fonction de ce niveau d'attention évalué pour cette personne par le module 7. Par exemple la valeur de l'index d'acceptation est proportionnelle au niveau d'attention. Un faible niveau d'attention affaiblit la valeur de l'index d'acceptation obtenue. Un niveau d'attention élevé conduit à calculer une valeur d'index d'acceptation plus élevée. En d'autres termes, l'index d'acceptation est pondéré par le niveau d'attention de la personne.

Comme supplément au niveau d'attention, le calcul de l'index d'acceptation effectué par le calculateur d'acceptation 10 comporte, comme donnée d'entrée, la valeur du niveau d'implication de la personne en question. Le niveau d'implication est avantageusement déterminé en fonction du mode de conduite selon lequel le véhicule 1 est opéré. Par exemple, le mode de conduite manuelle requiert un niveau d'implication plus fort pour la personne 2 actionnant alors la commande de conduite 5, que le mode de conduite autonome. En effet, en mode de conduite manuelle, la personne 2 est totalement impliquée dans la conduite du véhicule 1, alors que c'est à la charge de l'automate 6 d'assurer la conduite lorsque le véhicule 1 est en mode de conduite autonome. Pour déterminer l'indice d'implication de la personne 2, le calculateur 10 détermine si, à l'instant considéré, la commande de conduite 5 est en mode de conduite manuelle par cette personne 2 sans supervision par l'automate 6, en mode de conduite manuelle par cette personne 2 avec supervision de l'automate 6, en mode de conduite autonome par l'automate 6 avec supervision par cette personne 2, ou en mode de conduite autonome par l'automate 6 sans supervision par cette personne 2, ces modes de conduites étant listés ici en sens décroissant du niveau d'implication de ladite personne 2. Dans le présent exemple, concernant la personne passagère 3, le niveau d'implication dans la conduite est considéré comme étant au plus faible, puisque la personne passagère 3 n'est soumise à aucune responsabilité quant à la conduite du véhicule 1 quel que soit le mode de conduite. Par exemple, les informations sur le mode de conduite et/ou sur le statut de la personne considérée sont fournies au calculateur d'acceptation 10, en tant que données, par la commande de conduite 5 et/ou par l'automate 6, par l'intermédiaire des ports reliant ces derniers au calculateur d'acceptation 10. Par exemple la valeur de l'index d'acceptation est proportionnelle au niveau d'implication. Un niveau d'implication faible affaiblit la valeur de l'index d'acceptation. Un niveau d'implication élevé conduit à calculer une valeur d'index d'acceptation plus élevée. En d'autres termes, l'index d'acceptation est pondéré par le niveau d'implication de la personne.

Selon l'invention, le calculateur d'acceptation 10 se base à la fois sur le niveau d'attention et sur le niveau d'implication pour déterminer la valeur de l'index d'acceptation, par exemple en les additionnant ou en les multipliant l'un avec l'autre, éventuellement avec pondération d'un niveau par rapport à l'autre. Dès lors, une valeur d'index d'acceptation faible est obtenue si le niveau d'attention et le niveau d'implication sont faibles, alors qu'une valeur d'index d'acceptation élevée est obtenue si le niveau d'attention et le niveau d'implication sont élevés. Par exemple, la détermination de l'index d'acceptation consiste à multiplier l'index d'acceptabilité attribué à la nouvelle manœuvre autonome, par le niveau d'attention et par le niveau d'implication attribués à la personne.

En tout état de cause, le calculateur d'acceptation 10 se base au moins sur l'un des deux niveaux attribués à la personne, parmi le niveau d'attention et le niveau d'implication, pour déterminer l'index d'acceptation, outre l'index d'acceptabilité attribué à la nouvelle manœuvre autonome.

Une fois que l'automate 6 a prévu de mettre en œuvre la nouvelle manœuvre autonome, l'avertisseur 12 a pour fonction d'émettre le signal, seulement si nécessaire, à l'attention de la personne 2 et/ou 3 pour laquelle on a calculé l'index d'acceptation attaché à cette nouvelle manœuvre autonome.

L'avertisseur 12 comprend de préférence un ordinateur embarqué sur le véhicule et un programme mis en œuvre par cet ordinateur, ainsi qu'une ou plusieurs interfaces hommes-machine pour émettre le signal sur commande de l'ordinateur.

Le signal émis par l'avertisseur 12 se présente préférentiellement sous la forme d'un affichage symbolique ou d'un message formé sur un ou plusieurs écrans d'une interface homme-machine embarquée dans le véhicule, éventuellement associé à un signal sonore audible émis par un ou plusieurs haut-parleurs de l'interface homme machine. Cet écran ou ensemble d'écrans, et éventuellement ce ou ces haut-parleurs, constituent alors l'avertisseur 12. Le signal peut être formé par tout type de signaux suffisamment perceptible par la personne 2 ou 3 à qui ce signal est adressé, par exemple un signal visuel, notamment sous forme d'un symbole, d'un pictogramme ou d'un message écrit, un signal sonore, notamment une sonnerie ou un message vocal, ou encore haptique, notamment un vibreur. Le signal émis par l'avertisseur 12 peut aussi être une combinaison de tout ou partie de ces types de signaux.

Pour être à l'attention de la personne 2, on prévoit par exemple que l'avertisseur 12, ou une partie de l'avertisseur 12, appartient à une interface homme-machine occupant une partie d'un tableau de bord du véhicule 1, à l'intérieur de l'habitacle 4, le cas échéant. Pour être à l'attention de la personne 3, on prévoit par exemple qu'une autre partie de l'avertisseur 12 est appartient à une deuxième interface homme machine disposée sous le regard de la personne 3, par exemple dans une portière du véhicule 1 ou dans le dos du siège de la personne conductrice 2. Si l'avertisseur inclut des moyens pour émettre des signaux haptiques, par exemple sous la forme d'un vibreur, le vibreur est par exemple disposé dans l'assise et/ou dans le dossier du siège de la personne concernée, ou dans les manettes de la commande de conduite 5 s'il s'agit de la personne conductrice 2.

L'avertisseur 12 émet le signal seulement si l'index d'acceptation atteint un certain niveau, qui est qualifié de « seuil de déclenchement ». Par exemple, on prévoit que l'avertisseur n'émet pas le signal si l'index d'acceptation est de valeur supérieure à la valeur de seuil de déclenchement, alors que l'avertisseur émet le signal si l'index d'acceptation est de valeur inférieure à la valeur du seuil de déclenchement, ou l'inverse. Le but est d'envoyer le signal à la personne concernée seulement si son index d'acceptation reflète que la personne risque de ne pas accepter la nouvelle manœuvre autonome prévue par l'automate 6.

De préférence, le calculateur d'acceptation 10 commande l'avertisseur 12 d'émettre ou non le signal, par exemple par l'intermédiaire de ports de données les reliant. De préférence, le calculateur d'acceptation 10 effectue une comparaison entre l'index d'acceptation et le seuil de déclenchement puis, en fonction du résultat de cette comparaison, ordonne à l'avertisseur 12 d'émettre ou non le signal. On peut prévoir que, lorsque la valeur de l'index d'acceptation n'atteint pas le seuil de déclenchement, l'avertisseur 12 émet tout de même un signal, mais qui se distingue clairement, pour la personne, du signal qui aurait été émis si l'index d'acceptation avait atteint le seuil de déclenchement. Par exemple, lorsque la valeur de seuil est atteinte, on émet un signal d'alarme assez fort, alors que, lorsque la valeur de seuil n'est pas atteinte, on émet un simple signal d'information, plus discret, qui peut plus facilement être ignoré par la personne destinataire.

On peut prévoir que le seuil de déclenchement est prédéterminé, par exemple en étant enregistré dans la mémoire du calculateur d'acceptation 10 ou du calculateur d'acceptabilité 9. On peut par exemple prévoir une valeur de seuil unique et fixe, qui s'applique à toute personne et à toute manœuvre. Alternativement, on peut prévoir que la valeur du seuil de déclenchement dépend de la nouvelle manœuvre autonome qui est prévue par l'automate 6. Pour cela, on prévoit par exemple que, lorsque le calculateur d'acceptabilité 9 choisit à quel scénario de manœuvre la nouvelle manœuvre autonome correspond, le calculateur d'acceptabilité 9 choisit la valeur de seuil de déclenchement associée à ce scénario, ou calcule la valeur de seuil de déclenchement. Alternativement, on peut prévoir que la valeur de seuil dépend de la personne concernée par l'index d'acceptation, en fonction par exemple de son statut à bord, conducteur ou passager, ce qui peut être déterminé à l'aide du calculateur d'acceptation 10. Alternativement, la valeur de seuil de déclenchement peut être calculée par le calculateur d'acceptation 10 et/ou le calculateur d'acceptabilité 9 en fonction de différents critères, incluant par exemple le scénario de manœuvre identifié par le calculateur 9 et des critères propres à la personne 2 ou 3 à qui le signal est destiné, notamment son statut de conducteur ou de passager.

De préférence, l'avertisseur 12 est configuré pour émettre le signal, de façon individuelle, à l'attention de la ou les personnes à bord pour lesquelles l'index d'acceptation atteint le seuil de déclenchement, et pour ne pas émettre le signal aux autres personnes à bord. Toutefois, on peut prévoir d'émettre indistinctement le signal à l'attention de plusieurs personnes ou de toutes les personnes dès qu'une seule personne ou qu'un nombre suffisant de personne voit son index d'acceptation individuel ou de groupe atteindre le seuil de déclenchement.

De préférence, lorsque cela est possible, l'émission du signal débute avant que ne débute la nouvelle manœuvre automatique, par exemple quelques secondes ou dixièmes de secondes avant. Ainsi, cela laisse le temps à la personne concernée recevant le signal, soit de prendre certaines mesures telles que se cramponner au véhicule 1, soit de prendre conscience que la nouvelle manœuvre autonome va être mise en œuvre, voire de comprendre de quelle manœuvre il s'agit et/ou pour quelle raison la nouvelle manœuvre autonome est mise en œuvre. Alternativement, selon les cas, l'émission du signal peut être débutée simultanément avec le début de la nouvelle manœuvre autonome, voir après le début de la nouvelle manœuvre autonome, par exemple au début d'une partie critique ou brusque de la manœuvre autonome. Le signal peut être émis au cours de la manœuvre autonome si l'on détermine que le niveau d'acceptation a été modifié et finit par atteindre le seuil de déclenchement.

Les modalités d'émission du signal d'acceptation peuvent être modifiées en fonction de la situation. Par exemple, on peut choisir d'émettre un signal aux modalités différentes selon que la nouvelle manœuvre autonome est un freinage d'urgence ou un simple changement de voie.

On prévoit avantageusement que l'avertisseur 12, le calculateur d'acceptabilité 9 ou le calculateur d'acceptation 10 détermine les modalités du signal émis à l'attention de la personne, par exemple en fonction du scénario de manœuvre autonome qui a été identifié par le calculateur d'acceptabilité 9, en fonction de la valeur d'index d'acceptabilité et/ou en fonction de la valeur de l'index d'acceptation. Par exemple, un index d'acceptation faible peut susciter l'émission d'un signal sonore de forte intensité, alors qu'une valeur plus élevée , quoi qu'ayant atteint le seuil de déclenchement, suscitera simplement l'affichage visuel discret sans signal sonore. Notamment dans le cas où le signal est sous la forme d'un message vocal et/ou écrit, ou sous la forme d'un symbole, ce signal peut avantageusement indiquer à quel scénario la nouvelle manœuvre correspond, par exemple indiquer que la manœuvre est un freinage d'urgence ou un évitement d'obstacle, pour susciter une réaction appropriée chez la personne recevant le signal, afin d'augmenter la valeur de son index d'acceptation. Le signal peut aussi avantageusement indiquer à la personne concernée de se cramponner.

Dans ce qui précède, lorsque l'on décrit un ordinateur mettant en œuvre un programme, les expressions telles que « configuré pour » doivent être comprises comme « spécialement programmé pour ». Tout ordinateur et programmes informatiques mentionnés dans ce qui précède peuvent être regroupés et/ou combinés. En particulier, les ordinateurs susmentionnés appartenant aux calculateurs 9 et 10 peuvent être formés par un seul ordinateur mettant en œuvre un programme informatique effectuant toutes les fonctions susmentionnées. On peut même envisager que les ordinateurs du module de surveillance 7 et/ou de l'automate de conduite 6 et/ou de l'avertisseur 12 sont également une partie de cet ordinateur.

Toute caractéristique décrite dans ce qui précède pour un mode de réalisation ou une variante peut être mise en œuvre pour tout autre mode de réalisation ou variante décrit dans ce qui précède, pour autant que techniquement possible.

## Revendications

1. Véhicule routier (1), comprenant un automate de conduite (6), qui est configuré pour conduire le véhicule routier (1) selon des manœuvres autonomes ;
le véhicule routier (1) comprenant en outre :
• un calculateur d'acceptabilité (9), qui est configuré pour, à un instant considéré où l'automate de conduite (6) a prévu de conduire le véhicule routier (1) selon une nouvelle manœuvre autonome, déterminer un index d'acceptabilité de ladite nouvelle manœuvre autonome, en fonction d'une donnée d'intention de manœuvre fournie au calculateur d'acceptabilité (9) par l'automate de conduite (6) et reflétant la nouvelle manœuvre autonome ; et
• un avertisseur (12) ;
**caractérisé en ce que** :
• le véhicule routier (1) comprend en outre un calculateur d'acceptation (10), qui est configuré pour, audit instant considéré, déterminer un index d'acceptation attribué à une personne (2, 3) transportée par le véhicule routier (1), en fonction de l'index d'acceptabilité déterminé par le calculateur d'acceptabilité et en fonction :
◆ d'un niveau d'attention de la personne (2, 3) audit instant considéré, déterminé par un module de surveillance (7), surveillant ladite personne (2, 3) audit instant considéré et appartenant au véhicule routier (1) et
◆ d'un niveau d'implication de la personne (2, 3) dans la conduite du véhicule routier (1), audit instant considéré ; et
• l'avertisseur (12) est configuré pour émettre un signal à l'attention de ladite personne (2, 3) audit instant considéré, en fonction de la valeur de l'index d'acceptation, en particulier seulement si l'index d'acceptation atteint un seuil de déclenchement.

2. Véhicule routier (1) selon la revendication 1, dans lequel le module de surveillance (7) comprend un capteur de suivi du regard et/ou de la posture et/ou des mouvements et/ou des expressions faciales de la personne (2, 3) surveillée, afin de déterminer le niveau d'attention de ladite personne (2, 3).

3. Véhicule routier (1) selon l'une quelconque des revendications précédentes, dans lequel :
• le véhicule routier (1) est configuré pour basculer entre :
◆ un mode de conduite autonome avec supervision par la personne (2, 3) ; et
◆ un mode de conduite autonome sans supervision par la personne (2, 3) ;
• le calculateur d'acceptation (10) détermine le niveau d'implication de la personne (2, 3) en déterminant si, audit instant considéré, le véhicule routier (1) est en mode de conduite autonome avec supervision par ladite personne (2, 3) ou en mode de conduite autonome sans supervision par ladite personne (2, 3).

4. Véhicule routier (1) selon l'une quelconque des revendications précédentes, dans lequel :
• le véhicule routier (1) est configuré pour basculer vers un mode de conduite manuelle dans lequel la personne (2, 3) conduit le véhicule routier (1) selon des manœuvres manuelles, par action de la personne (2, 3) sur une commande de conduite (5) du véhicule routier (1) ;
• le calculateur d'acceptation (10) détermine le niveau d'implication de la personne (2, 3) en déterminant si, audit instant considéré, le véhicule routier (1) est en mode de conduite manuelle.

5. Véhicule routier (1) selon l'une quelconque des revendications précédentes, dans lequel :
• le calculateur d'acceptabilité (9) comprend une mémoire qui répertorie :
◆ des scénarios de manœuvre autonome paramétrisés avec des paramètres, et
◆ pour chaque scénario, un calcul de détermination de l'index d'acceptabilité en fonction des paramètres ;
• pour déterminer l'index d'acceptabilité, le calculateur d'acceptabilité (9) est configuré pour :
◆ en fonction de la donnée d'intention de manœuvre, identifier un scénario, parmi les scénarios répertoriés, qui s'applique à la nouvelle manœuvre autonome ;
◆ déterminer la valeur des paramètres du scénario identifié pour que le scénario identifié soit comparable à la nouvelle manœuvre autonome ;
◆ effectuer le calcul de détermination de l'index d'acceptabilité à l'aide de la valeur des paramètres ainsi déterminés.

6. Véhicule routier (1) selon la revendication 5, dans lequel l'avertisseur (12) est configuré pour que le signal émis à l'attention de la personne, soit émis selon des modalités qui dépendent d'au moins l'un des éléments suivants :
• le scénario de manœuvre autonome identifié par le calculateur d'acceptabilité (9) ;
• l'index d'acceptabilité déterminé par le calculateur d'acceptabilité (9) ;
• l'index d'acceptation déterminé par le calculateur d'acceptation (10).

7. Véhicule routier (1) selon l'une quelconque des revendications précédentes, dans lequel l'avertisseur (12) appartient à une interface homme-machine du véhicule routier (1).

8. Véhicule routier (1) selon l'une quelconque des revendications précédentes, dans lequel l'avertisseur (12) est configuré pour débuter l'émission du signal avant que ne débute la nouvelle manœuvre autonome.

9. Véhicule routier (1) selon l'une quelconque des revendications précédentes, dans lequel les manœuvres autonomes comprennent au moins l'une des manœuvres suivantes :
• un freinage d'urgence ;
• un évitement d'obstacle ;
• un changement de voie ;
• un maintien dans la voie ;
• une gestion de distance entre le véhicule routier (1) et un autre véhicule.

10. Procédé de conduite autonome du véhicule routier (1) selon l'une quelconque des revendications précédentes, le procédé comprenant :
• à l'aide de l'automate de conduite (6), fournir la donnée d'intention de manœuvre au calculateur d'acceptabilité (9), reflétant la nouvelle manœuvre autonome selon laquelle l'automate de conduite (6) a prévu de conduire le véhicule routier (1) à l'instant considéré ; et
• audit instant considéré, à l'aide du calculateur d'acceptabilité (9), déterminer l'index d'acceptabilité de ladite nouvelle manœuvre autonome en fonction de la donnée d'intention de manœuvre ;
**caractérisé en ce que** le procédé comprend en outre :
• audit instant considéré, déterminer le niveau d'attention de la personne (2, 3) à l'aide du module de surveillance (7) et le niveau d'implication de la personne (2, 3) à l'aide du calculateur d'acceptation (10) ;
• à l'aide du calculateur d'acceptation (10), déterminer l'index d'acceptation en fonction de l'index d'acceptabilité et en fonction du niveau d'attention déterminé et du niveau d'implication déterminé ; et
• à l'aide de l'avertisseur (12), émettre le signal à l'attention de ladite personne (2, 3) en fonction de la valeur de l'index d'acceptation, en particulier seulement si l'index d'acceptation atteint un seuil de déclenchement.

## Patentansprüche

1. Straßenfahrzeug (1), das einen Fahrautomaten (6) umfasst, der ausgelegt ist, um das Straßenfahrzeug (1) gemäß autonomen Manövern zu fahren;
wobei das Straßenfahrzeug (1) ferner umfasst:
• einen Akzeptabilitätsrechner (9), der ausgelegt ist, um zu einem betrachteten Zeitpunkt, zu dem der Fahrautomat (6) geplant hat, das Straßenfahrzeug (1) gemäß einem neuen autonomen Manöver zu fahren, einen Akzeptabilitätsindex des neuen autonomen Manövers in Abhängigkeit von einer Manöverabsichtsangabe zu bestimmen, die dem Akzeptabilitätsrechner (9) von dem Fahrautomaten (6) bereitgestellt wird und das neue autonome Manöver widerspiegelt; und
• einen Signalgeber (12);
**dadurch gekennzeichnet, dass**:
• das Straßenfahrzeug (1) ferner einen Akzeptanzrechner (10) umfasst, der ausgelegt ist, um zu dem betrachteten Zeitpunkt einen Akzeptanzindex zu bestimmen, der einer von dem Straßenfahrzeug (1) beförderten Person (2, 3) in Abhängigkeit von dem vom Akzeptabilitätsrechner bestimmten Akzeptabilitätsindex zugewiesen wird, und in Abhängigkeit von:
◆ einem Aufmerksamkeitsgrad der Person (2, 3) zu dem betrachteten Zeitpunkt, der von einem Überwachungsmodul (7) bestimmt wird, das die Person (2, 3) zu dem betrachteten Zeitpunkt überwacht und zu dem Straßenfahrzeug (1) gehört, und
◆ einem Beteiligungsgrad der Person (2, 3) am Fahren des Straßenfahrzeugs (1) zu dem betrachteten Zeitpunkt; und
• der Signalgeber (12) ausgelegt ist, um zu dem betrachteten Zeitpunkt in Abhängigkeit von dem Wert des Akzeptanzindex ein Signal an die Person (2, 3) zu senden, insbesondere nur dann, wenn der Akzeptanzindex einen Auslöseschwellenwert erreicht.

2. Straßenfahrzeug (1) nach Anspruch 1, wobei das Überwachungsmodul (7) einen Sensor zur Verfolgung des Blicks und/oder der Körperhaltung und/oder der Bewegungen und/oder der Gesichtsausdrücke der überwachten Person (2, 3) umfasst, um den Aufmerksamkeitsgrad der Person (2, 3) zu bestimmen.

3. Straßenfahrzeug (1) nach einem der vorherigen Ansprüche, wobei:
• das Straßenfahrzeug (1) ausgelegt ist, um umzuschalten zwischen:
◆ einem autonomen Fahrmodus mit Überwachung durch die Person (2, 3); und
◆ einem autonomen Fahrmodus ohne Überwachung durch die Person (2, 3);
• wobei der Akzeptanzrechner (10) den Beteiligungsgrad der Person (2, 3) bestimmt, indem er bestimmt, ob das Straßenfahrzeug (1) zu dem betrachteten Zeitpunkt im autonomen Fahrmodus mit Überwachung durch die Person (2, 3) oder im autonomen Fahrmodus ohne Überwachung durch die Person (2, 3) ist.

4. Straßenfahrzeug (1) nach einem der vorherigen Ansprüche, wobei:
• das Straßenfahrzeug (1) ausgelegt ist, um in einen manuellen Fahrmodus umzuschalten, in dem die Person (2, 3) das Straßenfahrzeug (1) durch Einwirken der Person (2, 3) auf eine Fahrsteuerung (5) des Straßenfahrzeugs (1) gemäß manuellen Manövern fährt;
• der Akzeptanzrechner (10) den Beteiligungsgrad der Person (2, 3) bestimmt, indem er bestimmt, ob das Straßenfahrzeug (1) zu dem betrachteten Zeitpunkt im manuellen Fahrmodus ist.

5. Straßenfahrzeug (1) nach einem der vorherigen Ansprüche, wobei:
• der Akzeptabilitätsrechner (9) einen Speicher umfasst, der verzeichnet:
◆ autonome Manöverszenarien, die mit Parametern parametrisiert sind, und
◆ für jedes Szenario eine Berechnung zur Bestimmung des Akzeptabilitätsindex in Abhängigkeit von den Parametern;
• wobei der Akzeptabilitätsrechner (9) zur Bestimmung des Akzeptabilitätsindex ausgelegt ist, um:
◆ in Abhängigkeit von der Manöverabsichtsangabe ein Szenario aus den gespeicherten Szenarien zu identifizieren, das auf das neue autonome Manöver angewendet wird;
◆ den Wert der Parameter des identifizierten Szenarios zu bestimmen, damit das identifizierte Szenario mit dem neuen autonomen Manöver vergleichbar ist;
◆ die Berechnung zur Bestimmung des Akzeptabilitätsindex mittels des Werts der derart bestimmten Parameter durchzuführen.

6. Straßenfahrzeug (1) nach Anspruch 5, wobei der Signalgeber (12) ausgelegt ist, damit das an die Person gesendete Signal gemäß Modalitäten gesendet wird, die von mindestens einem der folgenden Elemente abhängen:
• dem von dem Akzeptabilitätsrechner (9) identifizierten autonomen Manöverszenario;
• dem von dem Akzeptabilitätsrechner (9) bestimmten Akzeptabilitätsindex;
• dem von dem Akzeptanzrechner (10) bestimmten Akzeptanzindex.

7. Straßenfahrzeug (1) nach einem der vorherigen Ansprüche, wobei der Signalgeber (12) zu einer Mensch-Maschine-Schnittstelle des Straßenfahrzeugs (1) gehört.

8. Straßenfahrzeug (1) nach einem der vorherigen Ansprüche, wobei der Signalgeber (12) ausgelegt ist, um mit dem Senden des Signals zu beginnen, bevor das neue autonome Manöver beginnt.

9. Straßenfahrzeug (1) nach einem der vorherigen Ansprüche, wobei die autonomen Manöver mindestens eines der folgenden Manöver umfassen:
• eine Notbremsung;
• ein Ausweichen vor einem Hindernis;
• einen Spurwechsel;
• ein Spurhalten;
• eine Verwaltung des Abstands zwischen dem Straßenfahrzeug (1) und einem anderen Fahrzeug.

10. Verfahren zum autonomen Fahren des Straßenfahrzeugs (1) nach einem der vorherigen Ansprüche, wobei das Verfahren umfasst:
• Bereitstellen, mittels des Fahrautomaten (6), der Manöverabsichtsangabe für den Akzeptabilitätsrechner (9), die das neue autonome Manöver widerspiegelt, gemäß dem der Fahrautomat (6) geplant hat, das Straßenfahrzeug (1) zu dem betrachteten Zeitpunkt zu fahren; und
• Bestimmen, mittels des Akzeptabilitätsrechners (9), des Akzeptabilitätsindex des neuen autonomen Manövers in Abhängigkeit von der Manöverabsichtsangabe zu dem betrachteten Zeitpunkt;
**dadurch gekennzeichnet, dass** das Verfahren ferner umfasst:
• Bestimmen des Aufmerksamkeitsgrads der Person (2, 3) mittels des Überwachungsmoduls (7) und des Beteiligungsgrads der Person (2, 3) mittels des Akzeptanzrechners (10) zu dem betrachteten Zeitpunkt;
• Bestimmen, mittels des Akzeptanzrechners (10), des Akzeptanzindex in Abhängigkeit von dem Akzeptabilitätsindex und in Abhängigkeit von dem bestimmten Aufmerksamkeitsgrad und dem bestimmten Beteiligungsgrad; und
• Senden, mittels des Signalgebers (12), des Signals an die Person (2, 3) in Abhängigkeit von dem Wert des Akzeptanzindex, insbesondere nur dann, wenn der Akzeptanzindex einen Auslöseschwellenwert erreicht.

## Claims

1. A road vehicle (1), comprising an automatic driving system (6), which is configured to drive the road vehicle (1) using autonomous manoeuvres;
the road vehicle (1) further comprising:
• an acceptability calculator (9), which is configured in order, at a given instant when the automatic driving system (6) has planned to drive the road vehicle (1) using a new autonomous manoeuvre, to determine an acceptability index of said new autonomous manoeuvre, as a function of manoeuvre intention data supplied to the acceptability calculator (9) by the automatic driving system (6) and reflecting the new autonomous manoeuvre; and
• a warning device (12);
**characterised in that**:
• the road vehicle (1) further comprises an acceptability calculator (10), which is configured to determine, at said given instant, an acceptability index assigned to a person (2, 3) transported by the road vehicle (1), as a function of the acceptability index determined by the acceptability calculator and as a function of:
◆ a level of attention of the person (2, 3) at said given instant, determined by a monitoring module (7) monitoring said person (2, 3) at said given instant and belonging to the road vehicle (1), and
◆ a level of involvement of the person (2, 3) in driving the road vehicle (1) at said given instant; and
• the warning device (12) is configured to emit a signal to the attention of said person (2, 3) at said given instant, as a function of the value of the acceptability index, in particular only if the acceptability index reaches a trigger threshold.

2. The road vehicle (1) according to claim 1, in which the monitoring module (7) comprises a sensor for monitoring the gaze and/or the posture and/or the movements and/or the facial expressions of the person (2, 3) being monitored, in order to determine the level of attention of said person (2, 3).

3. The road vehicle (1) according to one of the preceding claims, wherein:
• the road vehicle (1) is configured to switch between:
◆ an autonomous driving mode with supervision by the person (2, 3); and
◆ an autonomous driving mode without supervision by the person (2, 3);
• the acceptability calculator (10) determines the level of involvement of the person (2, 3) by determining whether, at said given instant, the road vehicle (1) is in autonomous driving mode with supervision by said person (2, 3) or in autonomous driving mode without supervision by said person (2, 3).

4. The road vehicle (1) according to one of the preceding claims, wherein:
• the road vehicle (1) is configured to switch to a manual driving mode in which the person (2, 3) drives the road vehicle (1) according to manual manoeuvres, by action of the person (2, 3) on a driving control (5) of the road vehicle (1);
• the acceptability calculator (10) determines the level of involvement of the person (2, 3) by determining whether, at said given instant, the road vehicle (1) is in manual driving mode.

5. The road vehicle (1) according to one of the preceding claims, wherein:
• the acceptability calculator (9) comprises a memory which lists:
◆ autonomous manoeuvre scenarios with parameters, and
◆ for each scenario, a calculation to determine the acceptability index as a function of the parameters;
• to determine the acceptability index, the acceptability calculator (9) is configured to:
◆ on the basis of the manoeuvre intention data, identify one of the scenarios listed that applies to the new autonomous manoeuvre;
◆ determine the value of the parameters of the identified scenario so that the identified scenario is comparable to the new autonomous manoeuvre;
◆ calculate the acceptability index using the values of the parameters thus determined.

6. The road vehicle (1) according to claim 5, in which the warning device (12) is configured so that the signal emitted to the attention of the person is emitted according to conditions which depend on at least one of the following elements:
• the autonomous manoeuvre scenario identified by the acceptability calculator (9);
• the acceptability index determined by the acceptability calculator (9);
• the acceptability index determined by the acceptability calculator (10).

7. The road vehicle (1) according to any one of the preceding claims, wherein the warning device (12) belongs to a human-machine interface of the road vehicle (1).

8. The road vehicle (1) according to any one of the preceding claims, wherein the warning device (12) is configured to start transmitting the signal before the new autonomous manoeuvre begins.

9. The road vehicle (1) according to any one of the preceding claims, wherein the autonomous manoeuvres comprise at least one of the following manoeuvres:
• emergency braking;
• obstacle avoidance;
• a lane change;
• staying in the same lane;
• managing distance between the road vehicle (1) and another vehicle.

10. A method for autonomously driving the road vehicle (1) according to any one of the preceding claims, the method comprising:
• using the automatic driving system (6), supplying the manoeuvre intention data to the acceptability calculator (9), reflecting the new autonomous manoeuvre according to which the automatic driving system (6) has planned to drive the road vehicle (1) at said given instant; and
• at said given instant, using the acceptability calculator (9), determine the acceptability index of said new autonomous manoeuvre as a function of the manoeuvre intention data;
**characterised in that** the method further comprises:
• at said given instant, determining the level of attention of the person (2, 3) using the monitoring module (7) and the level of involvement of the person (2, 3) using the acceptability calculator (10);
• using the acceptability calculator (10), determine the acceptability index as a function of the acceptability index and as a function of the level of attention determined and the level of involvement determined; and
• using the warning device (12), emitting the signal to the attention of said person (2, 3) as a function of the value of the acceptability index, in particular only if the acceptability index reaches a trigger threshold.
